## Europäisches Patentamt
## European Patent Office
## Office européen des brevets

(19)

(11) Veröffentlichungsnummer: **0 032 534**
**B1**

(12) **EUROPÄISCHE PATENTSCHRIFT**

(45) Veröffentlichungstag der Patentschrift:
**25.01.84**

(21) Anmeldenummer: **80106844.6**

(22) Anmeldetag: **06.11.80**

(51) Int. Cl.³: **G 01 F 7/00**, G 01 F 9/00,
G 01 F 1/38, G 01 L 7/04,
G 01 D 5/04

(54) Einrichtung zur Anzeige des Kraftstoff-Streckenverbrauchs eines Kraftfahrzeugs.

(30) Priorität: **24.12.79 DE 2952268**

(43) Veröffentlichungstag der Anmeldung:
**29.07.81 Patentblatt 81/30**

(45) Bekanntmachung des Hinweises auf die Patenterteilung:
**25.01.84 Patentblatt 84/4**

(84) Benannte Vertragsstaaten:
**FR GB IT SE**

(56) Entgegenhaltungen:
**DE - B - 1 182 860**
**DE - C - 235 782**
**GB - A - 764 857**
**US - A - 4 055 085**

(73) Patentinhaber: **VDO Adolf Schindling AG,
Gräfstrasse 103, D-6000 Frankfurt/Main (DE)**

(72) Erfinder: **Stier, Bernhard, Hunsrückstrasse 2,
D-6233 Kelkheim-Fischbach (DE)**
Erfinder: **Ruschek, Gerhard, Elsa-Brandström-Strasse 1,
D-6234 Hattersheim 1 (DE)**

(74) Vertreter: **Könekamp, Herbert, Dipl.-Ing., Sodener
Strasse 9, D-6231 Schwalbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Einrichtung zur Anzeige des Kraftstoff-Streckenverbrauchs eines Kraftfahrzeuges

Die Erfindung betrifft eine Einrichtung zur Anzeige des Kraftstoff-Streckenverbrauchs eines Kraftfahrzeuges nach dem Oberbegriff des Anspruchs 1.

Bei einer derartigen Einrichtung (GB-A Nr. 764857) ist es bekannt, in einer vom Saugrohr zum Anzeigemanometer führenden Leitung ein Doppelventil anzuordnen. Durch jedes Ventilglied ist dabei jeweils eine kleine Öffnung der Leitung zur Aussenluft öffenbar. Entsprechend der jeweils eingelegten Gangstufe werden die Ventilglieder durch Magneten angesteuert. Während beim hohen direkten Gang die Öffnungen geschlossen sind, werden sie in den niedrigen Gangstufen mehr und mehr geöffnet, so dass der vom Saugrohr aus das Anzeigemanometer beaufschlagende Saugdruck mehr und mehr reduziert wird.

Diese Einrichtung ist durch die Ventile mit ihren Ansteuerungen sehr aufwendig. Ausserdem kann durch Verschmutzungen an den Öffnungen der Ventile die Betriebssicherheit der Einrichtung wesentlich beeinträchtigt werden.

Aus der DE-B Nr. 1182860 ist es bekannt, bei einem Messgerät zu einer Druckmessung durch Änderung der Übersetzung zwischen einem den Druck in einen Weg wandelnden Element und einem Zeiger das Messgerät unterschiedlichen Messbedingungen anzupassen.

Die Verwendung von Röhrenfedern in Anzeigemanometern ist aus US-A Nr. 4055085 bekannt.

Aufgabe der Erfindung ist es, eine Einrichtung der eingangs genannten Art zu schaffen, die mit geringem Aufwand und betriebssicher eine übersichtliche Anzeige des quantitativen augenblicklichen Kraftstoff-Streckenverbrauchs für wenigstens zwei Gänge bzw. Übersetzungsstufen des Schaltgetriebes gestattet.

Diese Aufgabe wird durch eine Einrichtung mit den in dem kennzeichnenden Teil des Anspruchs 1 angegebenen Merkmalen gelöst.

Diese Einrichtung ist besonders vorteilhaft, da sie mit einer einzigen Skalierung für wenigstens zwei Gänge auskommt, die somit besonders übersichtlich ist, und da die Anpassung der Anzeige an das jeweils wirksame Übersetzungsverhältnis, das durch das Schaltgetriebe beeinflusst wird, selbsttätig unter Einsatz wenig aufwendiger Mittel durch Veränderung des mechanischen Übersetzungsverhältnisses zwischen der Röhrenfeder und der Zeigerwelle des Anzeigemanometers erfolgt. Diese Änderung des Übersetzungsverhältnisses erlaubt zudem eine besonders betriebssichere Bauweise. Eine komplizierte Veränderung und Anpassung des Druckes, mit dem die Röhrenfeder beaufschlagt wird, an das Übersetzungsverhältnis entfällt somit.

In besonders vorteilhafter Weise ist die Einrichtung nach dem kennzeichnenden Teil des Anspruchs 2 aufgebaut. Der Vorteil besteht insbesondere darin, dass die Umgestaltung der mechanischen Verbindung zwischen dem unter dem Druck bewegbaren Ende der Röhrenfeder und der Zeigerwelle fertigungstechnisch einfach zu verwirklichen ist. Diese Realisierung sieht im wesentlichen vor, dass eine grundsätzlich üblicherweise vorgesehene Verbindungsstange zwischen dem beweglichen Ende der Röhrenfeder und dem drehbar gelagerten Zahnsegment einstellbar an dem Zahnsegment angelenkt ist, wobei die Einstellung durch elektromagnetische Steuerung in Abhänqigkeit von dem an dem Schaltgetriebe eingelegten Gang erfolgt. Die Einstellung wird so vorgenommen, dass die Anlenkstelle der Verbindungsstange von der Drehachse des Zahnsegments entfernt ist, wenn der direkte Gang eingelegt ist, so dass die Übersetzung zwischen dem freien Ende der Röhrenfeder und dem Zeigerritzel vergleichsweise gering ist. Beim Einlegen eines niedrigeren Gangs wird hingegen die Anlenkstelle näher zur Drehachse des Zahnsegments verschoben, wodurch bei einer gegebenen Auslenkung des freien Endes der Röhrenfeder eine vergleichsweise grosse Bewegung des Zeigerritzels erfolgt. Die Änderung des mechanischen Übersetzungsverhältnisses ist so einjustiert, dass sowohl bei dem direkten Gang als auch bei dem niedrigeren Gang die gleiche Skalierung für den Kraftstoff-Streckenverbrauch gilt.

In einer Weiterbildung der Einrichtung kann nach dem gleichen Prinzip durch die elektromagnetische Steuerung noch eine weitere Veränderung der Stellung der Verbindungsstange bezüglich der Drehachse des Zahnsegments vorgesehen sein, so dass es bei vier möglichen unterschiedlichen Abständen zu der Drehachse möglich ist, für vier Gangstufen den quantitativ zutreffenden Kraftstoff-Streckenverbrauch mit einer Skalierung anzuzeigen.

Die elektromagnetische Steuerung der Verstellung der Verbindungsstange wird nach Anspruch 3 wenig aufwendig dadurch realisiert, dass die Verbindungsstange mit einem Tauchkern eines Tauchmagnetsystems gekuppelt ist, dessen Erregerspule in einem Stromkreis mit einem an einem Element des Schaltgetriebes anliegenden Tatschalter angeordnet ist. Diese mit üblichen Mitteln aufgebaute elektromagnetische Steuerung gewährleistet in Verbindung mit der mechanischen Umschaltung der Verbindungsstange in dem Anzeigemanometer eine besonders betriebssichere Arbeitsweise.

Im einzelnen ist das mittels der Verbindungsstange umschaltbare Anzeigemanometer in wenig aufwendiger Weise nach Anspruch 4 aufgebaut.

Die Erfindung wird im folgenden anhand einer Zeichnung mit 2 Figuren erläutert. Es zeigen:

Fig. 1 die Erinrichtung mit einem umschaltbaren Anzeigemanometer, teilweise im Schnitt und

Fig. 2 eine graphische Darstellung, in der der Kraftstoff-Streckenverbrauch in Abhängigkeit von dem Saugrohrdruck für den dritten und vierten Gang dargestellt ist.

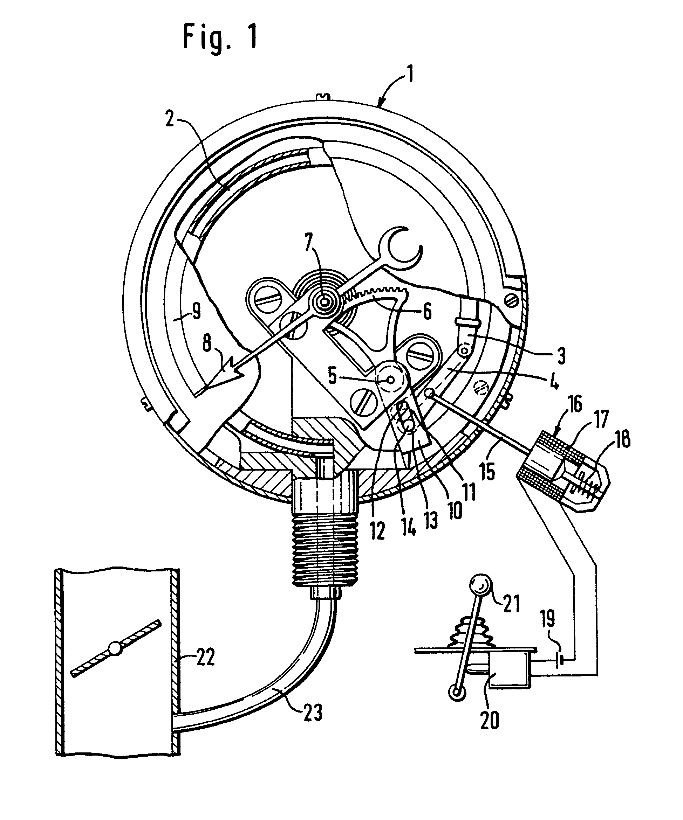

In Fig. 1 ist mit 1 ein Anzeigemanometer bezeichnet, das als Röhrenfedermanometer ausgebildet ist. Das Anzeigemanometer umfasst eine Röhrenfeder 2, deren freies Ende 3, welches unter dem Einfluss des Innendrucks der Röhrenfeder beweglich ist, an eine Verbindungsstange 4 angelenkt ist. Die Verbindungsstange 4 steht mit einem um eine Drehachse 5 drehbaren Zahnsegment 6 in Verbindung. Auf die Verbindung zwischen dem Zahnsegment und dem freien Ende 3 der Röhrenfeder wird noch weiter unten eingegangen. Das Zahnsegment greift in bekannter Weise in ein Ritzel auf der Zeigerwelle 7 ein, mit der ein Zeiger 8 verbunden ist. Der Zeiger spielt über eine Skalierung 9, die nur schematisch angedeutet ist.

Zur Umschaltung des mechanischen Übersetzungsverhältnisses zwischen der Bewegung des freien Endes 3 der Röhrenfeder und dem Drehwinkel des Zahlensegments 6 ist die Verbindungsstange an dem über die Drehachse hinausreichenden Arm 10 verstellbar gelagert. Hierzu weist der Arm ein Langloch 11 mit einer der Drehachse 5 zugewandten Anlenkstelle 12 und einer der Drehachse abgewandten Anlenkstelle 13 auf. Ein in die Verbindungsstange eingelassener Lagerstift 14 liegt je nach der Einstellung der Verbindungsstange an einer der Anlenkstellen an. Die durchgezogene Lage der Verbindungsstange 4 entspricht derjenigen für den direkten vierten Gang, während die unterbrochen dargestellte Lage der Verbindungsstange für einen niedrigen, den dritten Gang vorgesehen ist.

Zur Verstellung der Verbindungsstange ist diese über eine Kopplungsstange 15 mit einem Tauchmagnetsystem 16 gekoppelt, welches eine Erregerspule 17 umfasst. Eine Feder 18 versucht den Tauchkern aus der Erregerspule herauszudrücken, während die Erregerspule die Tendenz hat, den Tauchkern einzuziehen, wenn sie erregt ist.

Der Tauchkern ist einem Stromkreis mit einer Fahrzeugbatterie 19 und einem Tastschalter 20 angeordnet. Der Tastschalter liegt an einem mit dem Gangwählhebel 21 verbundenen Element an, derart, dass ein Kontakt in dem Tastschalter geschlossen wird, wenn der direkte vierte Gang eingelegt ist. In diesem Fall wird demzufolge die Erregerspule erregt und die Verbindungsstange in die durchgehend gezeichnete Lage gezogen. Bei geöffnetem Tastschalter drückt die Feder 18 den Tauchkern aus dem Tauchkernsystem heraus und die Verbindungsstange in die unterbrochen gezeichnete Lage.

Demzufolge wird in Abhängigkeit von dem in einem Saugrohr 22 herrschenden Saugrohrdruck, der über eine Leitung 23 zu der Röhrenfeder gelangt, ein der jeweilig ausgewählten Gangstufe entsprechender Winkel des Zeigers 8 zurückgelegt.

Der Abstand zwischen den Anlenkstellen 12 und 13 ist so gross gewählt, dass eine Übersetzungsänderung zwischen der Bewegung des freien Endes 3 und der Zeigerwelle eintritt, welche dem geänderten Übersetzungsverhältnis zwischen dem direkten Gang und dem nächst niedrigeren Gang entspricht.

In dem gezeigten Ausführungsbeispiel kann somit die Skalierung 9 so eingerichtet sein, dass sie sowohl für den direkten als auch für den nächst niedrigeren Gang zutrifft.

In einer anderen Ausführungsform können weitere Zwischenstellungen des Tauchkerns 16 vorgesehen werden, entsprechend verschieden eingestuften Strömen, so dass die Verbindungsstange zwischen den gezeigten Endstellungen 12 und 13 weitere Stellungen einnehmen kann, um damit auch eine richtige Anzeige des Kraftstoff-Streckenverbrauchs für weitere Gangstufen zu ermöglichen.

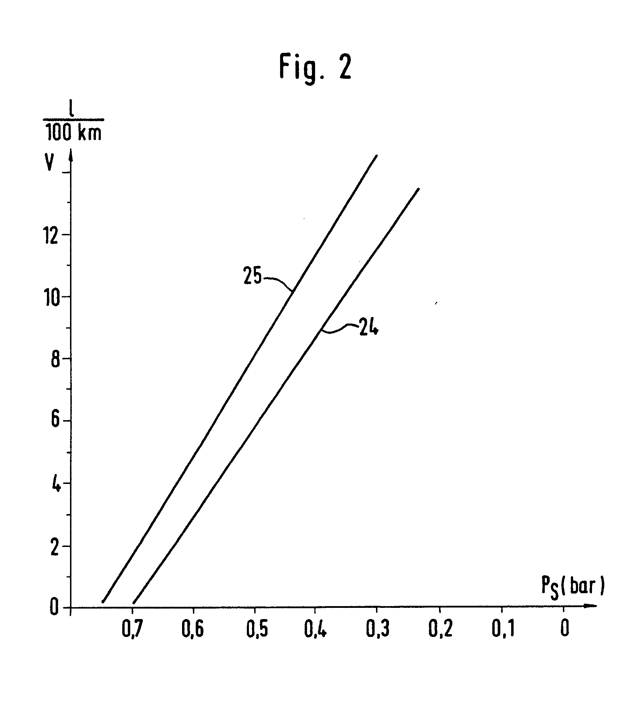

In der schaubildlichen Darstellung gemäss Fig. 2 ist der Saugrohrdurck entlang der Abszisse $P_S$ aufgetragen und der Kraftstoff-Streckenverbrauch entlang der Ordinate V. Die Kurve 24 entspricht dabei dem Kraftstoff-Streckenverbrauch für den eingelegten direkten Gang und die Kurve 25 für den eingelegten dritten Gang. Die Steigungen dieser Kurven sind entsprechend den nach Massgabe der Stellung der Verbindungsstange 4 in Fig. 1 eingestellten Übersetzungsverhältnissen so gewählt, dass der zutreffende Kraftstoff-Streckenverbrauch für den vierten Gang und für den dritten Gang auf einer Skala entsprechend der Ordinate V in Abhängigkeit von dem Saugrohrdruck angezeigt wird. Dabei muss dafür durch die Konstruktion des Messwerks in Fig. 1 gesorgt sein, dass der Nullpunkt der Anzeige erhalten bleibt, während der Endausschlag nach dem Übersetzungsverhältnis gedreht wird. Aus Fig. 2 ist ersichtlich, dass bei einem gegebenen Saugrohrdruck von 0,5 beispielsweise der Kraftstoff-Streckenverbrauch im vierten Gang etwa 5,5 l/100 km beträgt, bei dem gleichen Saugrohrdruck bei eingelegtem dritten Gang jedoch 8 l. Diese Werte können wie ausgeführt bei richtiger Wahl der Übersetzungsverhältnisse auf der gleichen Skalierung 9 abgelesen werden.

## Patentansprüche

1. Einrichtung zur Anzeige des Kraftstoff-Streckenverbrauchs eines Kraftfahrzeuges mit einem Ottomotor und einem Schaltgetriebe, mit einem Anzeigemanometer (1), das zur Messung des Saugrohrdrucks an das Saugrohr (22) des Ottomotors angeschlossen ist und einen auf einer Zeigerwelle (7) befestigten, über einer Skala (9) spielenden Zeiger (8) aufweist, sowie mit elektromagnetischen Mitteln (16-19) zur Beeinflussung des Zeigerausschlags in Abhängigkeit von der eingelegten Gangstufe, derart, dass bei wenigstens zwei Gangstufen des Schaltgetriebes die gleiche Skaleneinteilung für den Kraftstoffstreckenverbrauch gilt, dadurch gekennzeichnet, dass das Anzeigemanometer (1) eine mit einem Ende an das Saugrohr (22) angeschlossene Röhrenfeder (2) zur Messung des Saugrohrdrucks besitzt, dass das freie Ende der Röhrenfeder über ein Zeigerwerk (4, 5, 6) mit der Zeigerwelle (7) in Verbindung steht, und dass das Übersetzungsverhältnis des Zeigerwerks durch die elektromagnetischen Mittel (16-19) einstellbar ist.

2. Einrichtung nach Anspruch 1, dadurch gekennzeichnet, dass die Röhrenfeder (2) über eine Verbindungsstange (4) an einem drehbar gelagerten Zahnsegment (6) angelenkt ist, das in ein Zeigerritzel auf der Zeigerwelle (7) eingreift, wobei die Anlenkstelle der Verbindungsstange (4) an dem Zahnsegment (6) zwischen einer von der Drehachse (5) des Zahnsegments (6) entfernten Stellung (13) und einer zu der Drehachse (5) nahen Stellung (12) durch die elektromagnetischen Mittel (16-19) einstellbar ist.

3. Einrichtung nach einem der vorhergehenden Ansprüche, dadurch gekennzeichnet, dass die Verbindungsstange (4) mit einem Tauchkern eines Tauchmagnetsystems (16) gekuppelt ist, dessen Erregerspule (17) in einem Stromkreis mit einem an einem Element (21) des Schaltgetriebes anliegenden Tastschalter (20) angeordnet ist.

4. Einrichtung nach einem der vorhergehenden Ansprüche, dadurch gekennzeichnet, dass das Zahnsegment (6) in einem über seine Drehachse (5) hinausreichenden Arm (10) ein Langloch (11) aufweist, dessen Enden (12, 13) als Anlenkstellen eines an der Verbindungsstange (4) angeordneten Lagerstifts (14) ausgebildet sind.

## Revendications

1. Dispositif pour afficher la consommation de carburant, en fonction de la distance parcourue, d'un véhicule automobile équipé d'un moteur à allumage par étincelles et d'une boîte de vitesses, dispositif comprenant un manomètre indicateur (1) qui est raccordé au tube d'aspiration (22) du moteur à allumage par étincelles en vue de mesurer la pression régnant dans ce tube d'aspiration et qui comporte une aiguille (8) calée sur un axe (7) d'aiguille et mobile avec jeu sur une graduation (9), ainsi que des moyens électromagnétiques (16-19) pour influencer la déviation de l'aiguille en fonction du rapport enclenché, de telle manière que la même zone de la graduation soit valable pour indiquer la consommation de carburant en fonction de la distance parcourue dans au moins deux rapports de la boîte de vitesses, dispositif caractérisé par le fait que le manomètre indicateur (1) possède, pour mesurer la pression dans le tube d'aspiration, un tube élastique (2) relié par une extrémité au tube d'aspiration (22); par le fait que l'extrémité libre du tube élastique est en liaison avec l'axe (7) de l'aiguille par l'intermédiaire d'un mécanisme indicateur (4, 5, 6) et par le fait que le rapport de démultiplication du mécanisme indicateur peut être ajusté par les moyens électromagnétiques (16-19).

2. Dispositif selon la revendication 1, caractérisé par le fait que le tube élastique (2) est articulé par l'intermédiaire d'une tige de liaison (4) sur un secteur denté (6) qui, monté rotatif, engrène dans un pignon solidaire de l'aiguille et est calé sur l'axe (7) de cette aiguille, la zone d'articulation de la tige de liaison (4) sur le secteur denté (6) pouvant être ajustée, par les moyens électromagnétiques (16-19), entre une position (13) éloignée de l'axe de rotation (5) du secteur denté (6) et une position (12) rapprochée de cet axe de rotation (5).

3. Dispositif selon l'une des revendications précédentes, caractérisé par le fait que la tige de liaison (4) est accouplée à un noyau plongeur d'un système (16) à aimant plongeur dont la bobine d'excitation (17) est branchée dans un circuit électrique avec un interrupteur (20) à palpeur appliqué contre un élément (21) de la boîte de vitesses.

4. Dispositif selon l'une des revendications précédentes, caractérisé par le fait que, dans un bras (10) dépassant au-delà de son axe de rotation (5), le secteur denté (6) présente une boutonnière (11) dont les extrémités (12, 13) sont réalisées sous la forme de zones d'articulation d'un téton (14) disposé sur la tige de liaison (4).

## Claims

1. Apparatus for indicating the fuel consumption rate of a motor vehicle having an Otto-cycle engine and a change-speed gear, with an indicating pressure gauge (1) which is connected to the induction pipe (22) of the engine for measuring the induction pipe pressure and which has a pointer (8) secured on a pointer shaft (7) and movable over a scale (9), also with electromagnetic means (16-19) for influencing the pointer deflection in dependence on the gear which is engaged, in such a manner that the same graduation applies for the fuel consumption rate in the case of at least two-gear stages of the change-speed gear, characterised in that the indicating pressure gauge (1) comprises, for measuring the induction pipe pressure, a Bourdon-spring tube (2) which is connected at one end to the induction pipe (22), that the free end of the Bourdon tube is connected to the pointer shaft (7) by way of a pointer motion linkage (4, 5, 6), and that the transmission ratio of the motion linkage of the pointer is adjustable by the electromagnetic means (16-19).

2. Apparatus according to claim 1, characterised in that the Bourdon tube (2) is pivotably connected via a connecting rod (4) to a pivotably mounted toothed segment (6) which engages in a pointer pinion on the pointer shaft (7), the point at which the connecting rod (4) is articulated to the toothed segment (6) being adjustable between a position (13) remote from the pivoting axis (5) of the toothed segment (6) and a position (12) near the pivoting axis (5) by the electromagnetic means (16-19).

3. Apparatus according to one of the preceding claims, characterised in that the connecting rod (4) is coupled with a plunger core of a plunger solenoid system (16) whose energisation coil (17) is arranged in a circuit having a key-type switch (20) abutting on an element (21) of the change-speed gear.

4. Apparatus according to one of the preceding claims, characterised in that the toothed segment (6) comprises, in an arm (10) extending beyond the pivoting axis (5) of said segment, a slot (11) the ends (12, 13) of which are constructed as pivotal engagement points for a bearing pin (14) arranged on the connecting rod (4).

# Fig. 1

# Fig. 2